# EUROPEAN PATENT APPLICATION

(11) **EP 1 860 245 A1**
(43) Date of publication of application: **28.11.2007**
(21) Application number: 07004911.9
(22) Date of filing: 09.03.2007
(51) Int. Cl.: E03F 5/22

(54) **Sewage lifting station especially for domestic sewage**

(30) Priority: 10.03.2006 PL 37917106
(71) Applicant: Hydro-Vacuum S.A., 86-803 Grudziadz (PL)
(72) Inventor: Jerzy, Kossowicz, 58-573 Piechowice (PL); Bogdan, Pniewski, 86-300 Grudziadz (PL); Dominika, Olszak, 12-221 Ruciane-Nida (PL); Sebastian, Predel, 86-300 Grudziadz (PL); Milosz, Chalubowicz, 86-300 Grudziadz (PL)
(74) Representative: Cwiklinski, Grzegorz

(57) **Abstract**

Sewage lifting station has the tank (1) which has inside, in its upper part, directly opposite the sewage feed pipe (9), the vertical barrier (5) mounted between side walls of the tank (1), the vertical barrier (5) has small slit between its upper edge and the top wall of the tank (1), the vertical barrier (5) in its lower part is connected longitudinally to the horizontal barrier (6), wherein the horizontal barrier (6) is situated slightly below the inlet of the feed pipe (9) and is also mounted with its sides to the side walls of the tank (1) thus creating the inflow chamber (4), lower retention chamber (2) and upper retention chamber (3), wherein the horizontal barrier (6) has at least one hole to which the elbow ball valve (8) is connected, the other side of the elbow ball valve (8) is connected to the side hole in the separator casing (13), wherein the separator comprises the collar (14) and rods mounted on it (15, 17), the rods have different length and are mounted at different angles in relation to the collar (14), from collar (14) side the separator casing (13) is connected to outlet of the impeller pump (18), the other side of the separator casing (13) is connected to the elbow ball valve (21) to which the outlet pipe is connected.

## Description

This invention relates to a sewage lifting station of mostly domestic sewage, which is designed for pumping sewage containing large amounts of various solid wastes of highly different size and type.

The main problems with pumping of domestic sewage are high variations of the flow intensity throughout the day and presence of different solid wastes. Piston pumps allow pumping highly contaminated liquids, but they cannot provide high efficiency. Whereas impeller pumps can have very high efficiency, but they are sensitive to the presence of solids, which cause faster wear of impellers and if solids are bigger they often damage impellers.

Due to these reasons the devices with separators which separate solids which are bigger than specified, are being used. Pre-treated sewage is collected in the tank from which it is periodically pumped out with high efficiency by impeller pumps. Collected solids are taken from the separator by the pumped out stream of pre-treated sewage for later treatment.

The device known from description of the European patent, number EP 846 810 B1 is an example. This device is designed for sewage pumping and is equipped with the tank and two chambers situated outside, these chambers collect raw sewage which inflow from the top by the feed pipe through the separation chamber. Inside each chamber there is a floating ball of the diameter large enough to close the inlet of the feed pipe. Inside the chambers at their sides there are upper and lower connections. At the height of the lower connection these connections are connected to the closing device which is connected to the exit orifice of the impeller pump mounted outside the tank. Inlet of each impeller pump is connected to the bottom part of the tank by the elbow connection. At the height of lower and upper connections inside each chamber moving separation doors are mounted and directly opposite the lower connection there is an exit orifice with the elbow directed up. To this elbow the reflux valve is connected to which an end of the collecting pipe tee is connected; the pipe tee drains pumped sewage with one pipe to the outside. The closing device consists of two balls which are connected by the rocker arm which is fixed in the middle. The balls are arranged within housings which have an orifice in the top wall and the bottom part is connected to the lower connecting pipe.

Balls can move up and down inside the housing in a way that when one ball is up and closes the orifice the other one is in a forced down position and vice versa. Raw sewage which freely flows into the chamber is pre-treated on separation doors and flows into the tank through open orifice in housing of the closing device.

When certain level is reached in the tank the pump starts to pump out the pre-treated sewage and one orifice of the closing device closes and simultaneously the second orifice opens. Simultaneously, separation doors and the ball which closes the inlet to the chamber are lifted and the reflux valve opens. The stream of pumped sewage takes separated contaminations from the chamber and transports it outside, for example to the pipeline. At the same time the second orifice of the closing device at the second pump is open and sewage pre-treated on the separation doors flows into the tank. After reaching certain low level of the pre-treated sewage the pump stops and corresponding control system prevents it from starting again if the second pump has not started after reaching high level of sewage in the tank. The main inconvenience of this solution is the unreliability of reflux valves and separation doors; under which solid wastes can flow which hinders their proper work.

The device known from the European patent number EP 1 108 822 B1 is a similar solution. This device is designed for pumping sewage and it has two separation chambers for the raw sewage flowing in. Each chamber is divided by the horizontal separation barrier and the raw sewage flows inside the chambers from the separate tank situated above chambers through vertically mounted flap valves. The tank has grated overflow which is connected by the vertical pipe to the pre-treated sewage tank which is situated under separation chambers.

The inconvenience of this device results from the unreliability of flap valves which sometimes can be blocked by oblong solids for example small twigs, pieces of fabrics, bandages. Not all separated solid wastes are always taken, because pumped pre-treated sewage is divided into two streams. One of streams flows above the barrier and meets smaller resistance and the second stream flows under the barrier and meets considerable resistance.

The sewage lifting station of the present invention eliminates those disadvantages of the known arrangements.

The invention achieves this object that inside the tank in its upper part, directly opposite the sewage feed pipe, there is a vertical barrier mounted between side walls of the tank. The vertical barrier has a small slit between its upper edge and the upper wall of the tank and this vertical barrier in its lower part is longitudinally connected to the horizontal barrier. The horizontal barrier is situated slightly below the inlet of the feed pipe and is also mounted with its sides to the side walls of the tank thus creating the inflow chamber. The horizontal barrier has at least one hole to which an elbow ball valve is connected; the other side of this valve is connected to the side hole in the separator casing. The separator has the form of the collar with rods of different length mounted on it at different angles in relation to the collar. From the collar side the separator casing is connected to the impeller pump outlet and the other side of the separator casing is connected to the elbow ball valve to which the outlet pipe is connected.

Preferably the separator casing is pipe-shaped and connects opposite tank walls.

According to an especially preferred further development of the invention the separator casing is pipe-shaped with a conical end at the side of connection to the elbow ball valve.

Preferably the collar is circular with circumferentially and perpendicularly mounted longer rods, which are parallel to each other; and with shorter rods also circumferentially mounted, but bent to each other creating cone profile.

According to an especially preferred further development of the invention longer parallel rods on their ends are bent outside and its shorter rods bent towards the centre are mounted on the outer circumference compared to longer rods.

Preferably the horizontal barrier has two holes and to each hole an elbow ball valve is connected and the other side of each valve is connected to the side hole in the corresponding separator casing; and each casing is connected to the impeller pump outlet.

The best preferably, if impeller pumps are mounted on the elongated bottom part of the tank.

According to an especially preferred further development of the invention the horizontal barrier is arc-shaped with its ends situated below the middle part and with these ends fixed to walls.

Such solution creates very effective pumping system. It has compact construction ensuring small size with high efficiency of sewage pumping with high daily inflow amplitude of the sewage containing different solid contaminations. The separator used effectively keeps different solid contaminations which could damage the impeller pump and at same time it ensures pumping out solid contaminations during the work phase of the pump.

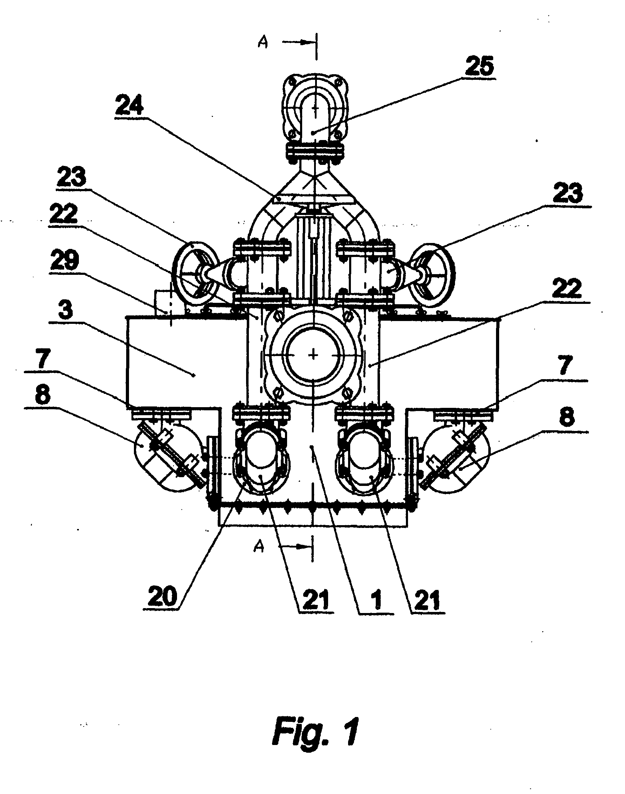

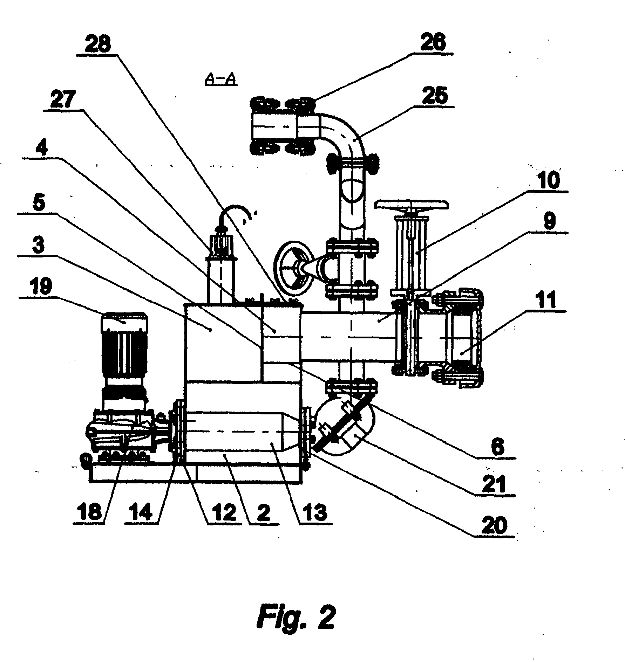

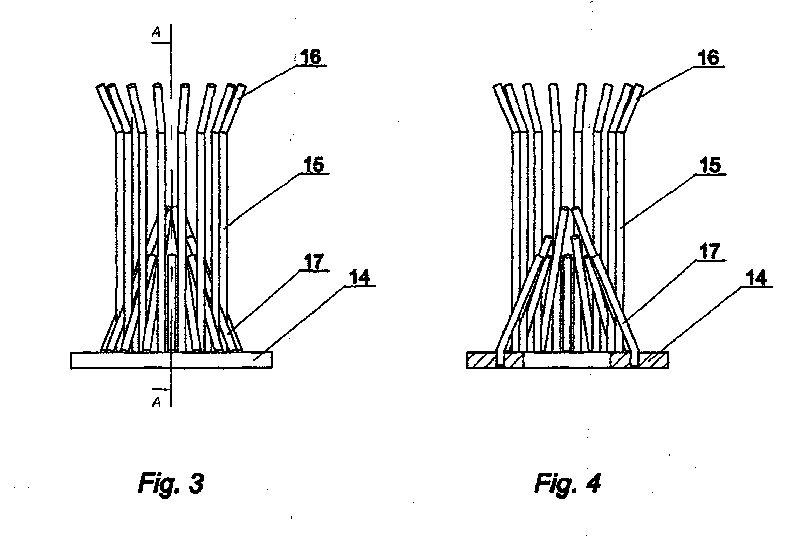

The invention will now be presented by reference to the embodiment partially illustrated schematically in the drawings which do not limit it in any way. Fig.presents lifting stations from the side of connection to the collector of free sewage inflow, Fig. 2 presents lifting stations in a schematic cross-section denoted as A-A in Fig. 1, Fig. 3 presents the separator and Fig. 4 presents cross-section of the separator along the line A-A shown in Fig. 3.

The lifting station has the T-shaped sewage tank 1 which consists of the retention chamber with separate lower retention chamber 2, upper retention chamber 3 and inflow chamber 4. The inflow chamber 4 along its entire length is separated from the upper retention chamber 3 by the vertical barrier 5 and is separated from the lower retention chamber 2 by the horizontal barrier 6. The horizontal barrier 6 has holes which are situated correspondingly over holes with collars 7 which fix side elbow ball valves 8. Valves 8 are connected to the side of the lower retention chamber 2. The inflow pipe 9 with the gate valve 10 is connected to the inflow chamber 4. The inflow pipe 9 ends with the flanged pipe fitting 11.

On the side opposite to the inflow pipe 9, the tank 1 in the area of the lower retention chamber 2 has two external collars 12. The separators in casing pipes 13 are fixed to these collars 12. Separators consist of collar 14 with fixed parallel rods 15 with bends 16 and skew rods 17.

Outlets of elbow ball valves 8 are inserted into separator casing pipes 13. Outlets of impeller pumps 18 which are driven by the motors 19 are connected to collars 12. On the opposite side, directly opposite each external collar 12 and on extension of the casing pipe 13, the hole with external collar 20 is situated. To each of them an elbow ball valve 21 is fixed with connected outlet pipe 22 which is equipped with the gate valve 23. Gate valves 23 are connected by the collecting pipe tee 24 to which the elbow connection 25 is connected. To the elbow connection 25 the pipe-pipe connection 26 is connected.

The tank 1 in the area of the upper retention chamber 3 has a filling level sensor which is an ultrasonic probe 27 which controls the work of impeller pumps 18.

At the top the tank 1 has inspection hatches 28 and ventilation connection 29.

The sewage flowing in through the inflow pipe 9 flows through holes in the horizontal barrier 6 and through open elbow ball valves 8 and next enters inside the separator casing pipes 13. Different solid wastes are kept on rods 15 and 17. The pre-treated sewage flows into the non-working impeller pump 18 through its pumping orifice and next the sewage through the suction orifice flows into the lower retention chamber 2 gradually filling the tank 1. After the sewage in the upper retention chamber 3 reaches certain level the probe 27 starts one of impeller pumps 18. The pre-treated sucked in sewage from the lower retention chamber 2 of the tank 1 takes stopped solid wastes from rods 15 and 17. Solid wastes are next pumped outside through the elbow ball valve 21 opened by the pressure of pumped sewage flow. At the same time the pressure of pumped sewage flow closes the ball elbow valve 8 preventing back flow of the sewage which flows in. In the meantime the raw sewage flows in through the second hole in the horizontal barrier 6 into the tank 1 through symmetrical separation system with impeller pump 18 turned off. After reaching certain low level of the pre-treated sewage the probe causes stopping of the first pump 18.

Electrical control system ensures that only second impeller pump 18 is started and after this pump is turned off and the upper retention chamber 3 is filled to certain level, it is only possible to the first impeller pump 18 and the whole cycle repeats.

## Claims

1. Sewage lifting station especially for domestic sewage having: - inflow chamber of raw sewage from which sewage through the check valve flows into the separator, - pre-treated sewage chamber, - solid wastes separator connected from one side to outlet of the impeller pump and from the other side through the check valve connected to sewage outflow pipe, wherein the suction orifice of the pump is connected to the pre-treated sewage chamber, **characterized in that** the tank (1) which has inside, in its upper part, directly opposite the sewage feed pipe (9), the vertical barrier (5) mounted between side walls of the tank (1), the vertical barrier (5) has small slit between its upper edge and the top wall of the tank (1), the vertical barrier (5) in its lower part is connected longitudinally to the horizontal barrier (6), wherein the horizontal barrier (6) is situated slightly below the inlet of the feed pipe (9) and is also mounted with its sides to the side walls of the tank (1) thus creating the inflow chamber (4), lower retention chamber (2) and upper retention chamber (3), wherein the horizontal barrier (6) has at least one hole to which the elbow ball valve (8) is connected, the other side of the elbow ball valve (8) is connected to the side hole in the separator casing (13), wherein the separator comprises the collar (14) and rods mounted on it (15, 17), the rods have different length and are mounted at different angles in relation to the collar (14), from collar (14) side the separator casing (13) is connected to outlet of the impeller pump (18), the other side of the separator casing (13) is connected to the elbow ball valve (21) to which the outlet pipe is connected.

2. The sewage lifting station according to claim 1, **characterized in that** the separator casing (13) is pipe-shaped and connects opposite walls of the tank (1).

3. The sewage lifting station according to claim 2, **characterized in that** the separator casing (13) is pipe-shaped with a conical end at the side of connection to the elbow ball valve (21).

4. The sewage lifting station according to claim 1 or 2, **characterized in that** the collar (14) is circular with circumferentially and perpendicularly mounted longer rods (15), which are parallel to each other; and shorter rods (17) also circumferentially mounted, but bent to each other creating cone profile.

5. The sewage lifting station according to claim 4, **characterized in that** the longer parallel rods (15) on their ends are bent outside (16) and the shorter rods (17), bent towards the centre, are mounted on the outer circumference in relation to longer rods.

6. The sewage lifting station according to claim 1, **characterized in that** the impeller pumps (18) are mounted on the elongated part of the lower retention chamber of the tank (1).

7. The sewage lifting station according to claim 1, **characterized in that** the horizontal barrier (6) has two holes and to each hole an elbow ball valve (8) is connected and the other side of each valve (8) is connected to the side hole in the corresponding separator casing (13); and each casing (13) is connected to outlet of the impeller pump (18).
